# EUROPEAN PATENT APPLICATION

(11) **EP 4 141 044 A1**
(43) Date of publication of application: **01.03.2023**
(21) Application number: 21193462.5
(22) Date of filing: 27.08.2021
(51) Int. Cl.: C08G 63/553, C09J 123/08

(54) **BIO-BASED HOT MELT TACKIFIER**

(71) Applicant: Henkel AG & Co. KGaA, 40589 Düsseldorf (DE)
(72) Inventor: BRANDT, Adrian, 45219 Essen (DE); BECK, Horst, 41470 Neuss (DE); KUX, Alexander, 40739 Monheim (DE); SCHAEFFER, Sascha, 40822 Mettmann (DE)
(74) Representative: Viering, Jentschura & Partner mbB Patent- und Rechtsanwälte

(57) **Abstract**

The invention relates to hot melt adhesive compositions comprising at least one adhesive base polymer and at least one betulin tackifier, to methods of using the adhesive to bond substrates together, and to articles of manufacture comprising the adhesive.

## Description

The invention relates to hot melt adhesive compositions comprising at least one adhesive base polymer and at least one betulin tackifier, to methods of using the adhesive to bond substrates together, and to articles of manufacture comprising the adhesive.

Hot melt adhesives ("HMAs") are ubiquitous in many areas of commerce including consumer and industrial packaging where a bond is required between a substrate and a second item. HMAs are routinely used in the manufacture of corrugated cartons, boxes, cereal boxes and the like. They are also used in diverse areas, such as bookbinding; sealing the ends of paper bags; furniture manufacturing; manufacture of particleboard, linerboard, various other paper goods, and for adhering other articles, such as glass, metals and various plastics, including attaching paper labels to plastic containers. Additional uses of hot-melt adhesives include, for example only, lamination, product assembly, and nonwoven construction applications, particularly, but without limitation, edge banding and profile wrapping.

Because of these diverse applications, hot melt adhesives may be required to maintain a strong bond over a wide range of temperature conditions. For example, in the manufacture of corrugated cartons used for shipping refrigerated or frozen foods, or foods packed in ice, hot melt adhesives are generally selected because of their ability to maintain a strong bond under low temperature conditions. However, in other applications the hot melt adhesive may have to maintain a strong bond to the substrate under extremes of stress and shock in handling, and high temperatures and humidity. Foods or beverages for example are often packaged by warm or hot filling. Moreover, cases and cartons often encounter very high temperatures when trucked, so adhesives having sufficiently good heat resistance are required in these applications. "Sufficiently good heat resistance" is to be understood to mean that the cured adhesive does not immediately soften when acted upon by elevated temperature, with the result that the adhesive bond loosens and/or the bonded parts shift with respect to one another.

A further issue that is encountered basically in every technical field is sustainability. Substituting petrol-based raw materials with those that can be obtained from sustainable sources is gaining in importance in the chemical industry, especially in light of increasing environmental awareness and the scarcity of the raw materials that have heretofore been used. Apart from finding and identifying suitable sources of raw materials, this also includes the difficulty that raw materials from renewable sources usually have different properties from the corresponding petrol-based compounds, which is reflected in the products made from the raw materials, which may have different chemical or physical properties, for example, than products manufactured from petroleum-based starting materials. Accordingly, not only do the extraction and processing chains have to be adapted to the raw materials, but some of the production methods must also be adapted in order to allow for the difference between petroleum-based raw materials and raw materials from renewable resources.

There continues to be a need in the art for hot melt compositions that have high heat resistance. Furthermore, there is a need in the art for hot melt compositions with improved sustainability.

The current invention addresses these needs in the art, as it has surprisingly been found that betulin-based polyesters may be employed as tackifiers in hot melt adhesive compositions, whether in combination with or as surrogate for conventionally used state-of-the-art tackifiers, particularly petrol-based tackifiers. It has been further found that betulin tackifiers are not only compatible with typically used hot melt adhesive components, but further that employment of betulin tackifiers allows for purposeful tailoring of physical parameters of the resultant adhesive composition, such as heat resistance, rheology, elastic modulus, elongation, tensile strength, and shore D hardness. Particularly, the betulin-based polyesters disclosed herein exhibit good compatibility with most commonly used hotmelt polymers (i.e., EVAs and APAOs), allow for broad viscosity ranges, and yield compositions with high E-modulus and high heat resistance. In comparison to classical colophonium-based tackifiers used as a surrogate for fossil-based tackifiers, the presently disclosed betulin-tackifiers provide for a much more benign smell and have lower allergy potential.

In a first aspect, the invention thus provides a hot melt adhesive composition comprising at least one adhesive base polymer, characterized that it further comprises at least one betulin tackifier.

In a second aspect, the present invention further provides an article of manufacture comprising the hot melt adhesive composition described herein.

In a third aspect, the present invention further provides a method of using the hot melt adhesive composition described herein.

In a fourth aspect, the present invention also provides a bonded assembly comprising two or more substrates bonded together by the adhesive composition described herein.

Other features and aspects of the subject matter are set forth in greater detail below.

"One or more", as used herein, relates to at least one and comprises 1, 2, 3, 4, 5, 6, 7, 8, 9 or more of the referenced species. Similarly, "at least one" means one or more, i.e., 1, 2, 3, 4, 5, 6, 7, 8, 9 or more. "At least one", as used herein in relation to any component, refers to the number of chemically different molecules, i.e., to the number of different types of the referenced species, but not to the total number of molecules. For example, "at least one polyol" means that at least one type of molecule falling within the definition for a polyol is used but that also two or more different molecule types falling within this definition can be present, but does not mean that only one molecule of said polyol is present.

"About", as used herein in relation to a numerical value, means said value ±10%, preferably ±5%.

If reference is made herein to a molecular weight, this refers to the average number molecular weight Mₙ, if not explicitly stated otherwise. The number average molecular weight Mₙ of polymers can be calculated based on end group analysis (OH numbers according to DIN EN ISO 4629, NCO content according to *EN ISO* 11909) or can be determined by gel permeation chromatography according to DIN 55672, in particular DIN 55672-1 with THF as the eluent. If not stated otherwise, all given molecular weights are those determined by gel permeation chromatography according to DIN 55672-1 with THF as the eluent. The weight average molecular weight M_{w} can be determined by GPC, as described for Mₙ.

All percentages given herein in relation to the compositions or formulations relate to weight % relative to the total weight of the respective composition or formula, if not explicitly stated otherwise.

It has been discovered that the herein below described betulin-based polyesters can be used as tackifiers in hot melt adhesive compositions. They have been found to be compatible with a broad range of base polymers, as herein described below. Although they may be used in combination with conventional tackifiers, replacement of one or more conventionally used tackifiers with the herein described betulin tackifier is possible to increase overall sustainability of the resultant formulation in relying on biobased materials while at the same time providing for unique performance advantages, such as increased heat stability, adaptability of physical parameters such as composition rheology, improved elastic modulus, elongation at break, tensile strength, and shore D hardness.

The adhesive base polymer will typically be used in amounts of from about 20 wt.-% to about 75 wt.-%, more typically from about 30 wt.-% to about 60 wt.-%, for instance, but without limitation, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59 or 60 wt.-%, based on the total weight of the hot melt adhesive composition, as the main base adhesive polymer component. By "main" or "base" polymer component means the adhesive polymer component present in the largest amount of the adhesive. It will be appreciated that other polymeric additives may, if desired, be added to the adhesive formulation.

Any base polymer suitable for use in formulating hot melt adhesives, as are well known to those skilled in the art, may be used in the practice of the invention. Such polymers include amorphous polyolefins, ethylene-containing polymers and rubbery block copolymers, as well as blends thereof. Base polymers include but are not limited to ethylene vinyl acetate (EVA), ethylene n-butyl acrylate (EnBA), ethylene ethyl hexyl acrylate (EEHA), metallocene polyolefins, functional metallocene polyolefins, amorphous α-olefins and various mixtures of compatible polymers. A compatible polymer is defined herein as any polymer that has the ability to mix without objectionable separation, i.e., without adversely affecting the performance of the formulated adhesive.

In various embodiments, the at least adhesive base polymer is selected from the group consisting of ethylene vinyl acetate (EVA), metallocene polyolefins, functional polyolefins, amorphous α-olefins, styrene-isoprene rubber (SIS), polybutadiene polymers, polylactic acid polymers, polyhydroxyalkanoates, as well as mixtures of the aforementioned. In various embodiments, the at least one adhesive base polymer is an ethylene vinyl acetate (EVA) polymer. In various other embodiments, the at least one adhesive base polymer is selected from the group consisting of polyolefins, particularly metallocene polyolefins, functional metallocene polyolefins, amorphous α-olefins and mixture thereof.

The hot melt adhesives of the invention further comprise a betulin tackifier. Betulin, which is also known as (3β)-lup-20(29)-en-3,28-diol, is among the pentacyclic triterpenes and has a C30 body, the basic structure of which is based on hydrocarbon rings. Owing to the structure of the betulin, which is composed of four six-membered rings and one five-membered ring, it belongs to the triterpene group of lupanes. Pentacyclic triterpenes are very common in the plant kingdom. For instance, the cork and bark of the birch tree contain as much as 40% pentacyclic triterpenes, wherein up to 34% of the dry mass of the white birch cork is composed of betulin. Besides the birch cork, betulin is present in smaller concentrations in the roots and leaves of the white ash, for example, and in the bark of the American mountain ash. It accumulates as a by-product of paper production.

A "betulin tackifier", in the context of the present invention, refers to an amorphous polyester on the basis of betulin, which has a glass transition temperature T_{g} of -50 °C to 100 °C, preferably -50 °C to 100 °C, more preferably 0 °C to 100 °C. Polyesters with a glass transition temperature in the indicated range can take on a liquid to a solid physical state at room temperature. The glass transition temperature was determined by dynamic difference calorimetry (differential scanning calorimetry, DSC).

In various embodiments, the betulin tackifier employed in the context of the present invention are in a solid amorphous physical state at room temperature.

The tackifier according to the invention is distinguished from conventional state-of-the-art tackifiers in that it is produced from renewable raw materials. For this reason, the proportion of betulin structural units in the polyester polymeric structure is preferentially 6 to 65 mol%, especially preferably 10 to 50 mol%. Surprisingly, it was found that the properties of aromatic polyesters in particular could be simulated in this way, without the polyester having migration-capable impurities that would pose a hindrance to a later application. Furthermore, the betulin tackifiers of the present invention are distinguished in terms of smell and allergy potential. Rosin esters are usually a wild mix of different naturally occurring ingredients. Betulin tackifiers, however, are much cleaner in comprising less impurities. Moreover, the polymeric character of these betulin tackifier is another safety differentiator, since the betulin polymers tend not to migrate or form cycles/lower molecular weight structures that can migrate into food or other media.

In various embodiments, the betulin tackifier according to the invention has an acid value of less than 50 mg KOH/g, preferentially less than 10 mg KOH/g and especially preferably less than 5 mg KOH/g, in each case per gram of reaction mixture. In an especially preferred embodiment, the betulin tackifier has an acid value of 0.1 to 3 mg KOH/g per gram of reaction mixture. It has been surprisingly demonstrated such polyesters having an acid value in the claimed range exhibit good compatibility with other mono- and polyfunctional compounds.

According to the invention, the acid value is a measured variable that is to be determined by experiment and that is a measure for the number of free acid groups in the respectively defined reference quantity. The acid value can be determined by dissolving a weighed-out sample of the reference quantity in a solvent mixture and then potentiometrically titrating it in methanol with 0.05 mol/l KOH. The acid value corresponds to the amount of KOH added per gram of the reference quantity at the reversal point of the potentiometric titration curve.

In various embodiments, the carboxylic acid value (COOH value) is considered a measure for the number of free carboxylic acid groups in a respectively defined reference quantity. The betulin tackifier preferably has an COOH value of 10 to 220 mg KOH/g, especially preferably 20 to 150 mg KOH/g, in each case per gram of reaction mixture. The COOH value can likewise be determined by experiment using potentiometric titration or acid-base titration.

In various embodiments, the hydroxyl value (OH value) is considered a measure of the number of free hydroxyl groups in a chemical substance, usually expressed in units of the mass of potassium hydroxide (KOH) in milligrams equivalent to the hydroxyl content of one gram of the chemical substance. The betulin tackifier preferably has an OH value of 10 to 220 mg KOH/g, especially preferably 20 to 150 mg KOH/g, in each case per gram of reaction mixture. The betulin tackifier described herein exhibits an advantageous viscosity that permits efficient processing of the polyester when the OH value lies in the range indicated. The OH value can likewise be determined by experiment using potentiometric titration or acid-base titration.

In various embodiments, the betulin tackifier further contains amino groups, wherein they are preferentially primary or secondary amino groups. Preferentially, the amine value of the betulin tackifier is 1 to 20 mg KOH/g, especially preferably 5 to 10 mg KOH/g. The amine value can be determined by means of titration, as with the OH value, and it is similarly considered a measure for the number of free amino groups in a respectively defined reference quantity.

In various embodiments, the sum of the OH value and the amine value is 10 to 220 mg KOH/g, especially preferably 20 to 150 mg KOH/g.

In various other embodiments, the sum of the COOH value and the amine value is 10 to 220 mg KOH/g, especially preferably 20 to 150 mg KOH/g.

In especially preferred embodiments, the betulin is obtained from renewable raw materials. A renewable source from which betulin can be isolated is cork and wood bark, for example.

The betulin tackifier preferably is a reaction product of betulin with at least one compound selected from the group consisting of dicarboxylic acid, short-chain polyols, amine, vegetable oil and mixtures thereof.

The dicarboxylic acid is preferentially selected from the group consisting of aliphatic dicarboxylic acids with 4 to 24 carbon atoms, aromatic dicarboxylic acids, dimer acids and mixtures thereof.

Particularly preferred are suitable aliphatic dicarboxylic acids selected from the group consisting of succinic acid, adipic acid, azelaic acid, sebacic acid, dodecanoic acid, tridecanedioic acid and mixtures thereof.

Suitable aromatic dicarboxylic acids are preferentially selected from the group consisting of phthalic acid, isophthalic acid, terephthalic acid, furandicarboxylic acid, anhydrides, methyl esters, and hallides thereof, the pure acids being preferred, as well as mixtures of the aforementioned.

In various embodiments, the dimer acid or acids are dimers of fatty acids of the general formula CₙH₂ₙ₊₁COOH, where n is a whole number from 4 to 33, preferentially 7 to 17. In addition to dimer acids, their derivatives are preferentially also used, which can be obtained, for example, by hydrating or distilling the corresponding dimer acids. Also, preferably, the fatty acid is selected from the group consisting of caprylic acid, capric acid, lauric acid, myristic acid, palmitic acid, stearic acid, the derivatives of these fatty acids and mixtures thereof.

The short-chain polyol is preferentially a diol with 2 to 8, preferably 3 to 6 carbon atoms. Suitable short-chain polyols are preferentially selected from the group consisting of ethylene glycol, 1,2-propanediol, 1,3-propanediol,1,3- butanediol, 1,4- butanediol, 1,6-hexanediol, neopentyl glycol, diethylene glycol, triethylene glycol, 2-methyl-1,3-propanediol, 1,4-pentanediol, glycerol, pentaerythritol and isomers of the aforementioned, as well as mixtures thereof. The polyester polyol according to the invention is distinguished by its high content of renewable raw materials, and therefore the short-chain polyol or, in an especially preferred embodiment, is produced from renewable raw materials.

In various embodiments, the amine is a diamine, preferentially one selected from the group consisting of ethylenediamine, tetramethylenediamine, pentamethylenediamine, hexamethylenediamine, octamethylenediamine and decamethylenediamine piperazine, Jeffamine^{®} (polyetheramine) and mixtures thereof.

Vegetable oils suitable for reacting with betulin may be selected from the group consisting of soybean oil, linseed oil, sunflower oil, rapeseed oil, thistle oil, fish oil, castor oil, tall oil, coconut oil, palm oil, olive oil and mixtures thereof.

In various embodiments, the betulin tackifier preferentially includes a proportion of renewable raw materials of 80 to 100 wt.-%, preferentially 90 to 99 wt.-%, in each case based on the total weight of the polyester. Therefore, an embodiment is especially preferred in which betulin and/or the compound selected from the group consisting of dicarboxylic acid, short-chain polyol, amine, vegetable oil and mixtures thereof are produced from renewable raw materials.

The method of production of the betulin tackifier described above generally comprises the following steps:
(a) providing a mixture comprising betulin and at least one compound selected from the group consisting of dicarboxylic acid, short-chain polyol, amine, vegetable oil and mixtures thereof;
(b) heating the mixture from step a) and obtaining the polyester.

The method described herein permits the production of polyesters on the basis of betulin without having to use any hazardous reagents, such as chlorinated compounds or solvents.

In various embodiments, the mixture in step b) is heated to a temperature of 200 to 250 °C, preferentially 205 to 240 °C.

Reacting betulin with the compound selected from the group consisting of dicarboxylic acid, short-chain polyol, amine, vegetable oil and mixtures thereof proceeds efficiently when the compound is used as the reaction medium. Thus, the proportion of betulin and the compound selected from the group consisting of dicarboxylic acid, short-chain polyol, amine, vegetable oil and mixtures thereof is preferentially selected such that the betulin is present in a dissolved form in the mixture.

In various embodiments, the mixture in step a) of the tackifier production method contains betulin and at least one short-chain polyol. Preferentially, the proportion of betulin in the mixture amounts to 10 to 70 wt.-%, preferentially 25 to 65 wt.-%, based on the total weight of the mixture. Preferentially, the proportion of betulin in the mixture is 9 to 25 wt.-%, preferentially 10 to 20 wt.-%, based on the total weight of the mixture. In an especially preferred embodiment, the mixture further contains at least one dicarboxylic acid, preferentially in an amount of 9 to 60 wt.-%, preferentially 25 to 45 wt.-%, based on the total weight of the mixture.

In various other embodiments, the mixture in step a) contains betulin and at least dicarboxylic acid, preferentially at least one dimer acid. Preferentially, the proportion of betulin in the mixture amounts in this case to 10 to 60 wt.-%, preferentially 25 to 55 wt.-%, based on the total weight of the mixture. Also preferably, the proportion of dimer acid is 30 to 75 wt.-%, preferentially 40 to 60 wt.-%, based on the total weight of the mixture. If the amount of dicarboxylic acid is selected to be above 50 mol-%, based on the total molar weight of the reaction mixture, COOH terminated as opposed to OH terminated polyesters may be obtained. In some embodiments, the mixture further contains at least one short-chain polyol, preferentially in an amount of 1 to 8 wt.-%, especially preferably 1.5 to 6 wt.-%.

In various further embodiments, the mixture in step a) contains betulin and at least one vegetable oil. Preferentially, the proportion of betulin in the mixture amounts in this case to 10 to 40 wt.-%, preferentially 20 to 35 wt.-%, based on the total weight of the mixture. Also preferably, the proportion of vegetable oil is 1 to 50 wt.-%, preferentially 1 to 20 wt.-%, based on the total weight of the mixture. In an especially preferred embodiment, the mixture further contains at least one dicarboxylic acid, preferentially in an amount of 1 to 40 wt.-%, especially preferably 1 to 30 wt.-%.

The proportion of amine in the mixture may be 5 to 25 wt.-%, preferably 9 to 25 wt.-% and especially preferably 10 to 20 wt.-%, based on the total weight of the mixture.

In some embodiments, the mixture contains short-chain polyols and amines. Preferentially, the amines are diamines, especially preferably those selected from the group consisting of ethylenediamine, tetramethylenediamine, pentamethylenediamine, hexamethylenediamine, octamethylenediamine and decamethylenediamine piperazine, Jeffamine^{®} (polyetheramine) and mixtures thereof.

In various embodiments, the mixture in step a) further contains a catalyst, preferentially in an amount of 0.01 to 0.05 wt.-%, especially preferably 0.02 to 0.04 wt.-%, based on the total weight of the mixture.

The betulin tackifier component will typically be used in amounts of from about 5 to 80 wt.-%, preferably 5 to 70 wt.-%, more preferably from about 10 to 60 wt.-%, still more preferably from about 15 to 50 wt.-%, based on the total weight of the hot melt adhesive composition.

In various embodiments, in addition to the at least one betulin tackifier, as herein defined and described above, the hot melt adhesive composition according to the present invention comprises one or more further tackifiers. It is, however, generally preferred that the total amount of tackifier present in the hot melt adhesive composition described herein, i.e., the at least one betulin tackifier and optionally one or more further tackifiers, not exceed about 70 wt.-%, preferably not exceed 60 wt.-%, and more preferably not exceed about 50 wt.-%, based on the total weight of the hot melt adhesive composition.

Additional tackifiers useful for employment according to the present invention include tackifier components generally known in the art and commonly used in the field of hot melt adhesive compositions. Non-limiting examples of suitable tackifier components include, without limitation, tackifying resins such as aliphatic, cycloaliphatic and aromatic hydrocarbons and modified hydrocarbons and hydrogenated versions; terpenes and modified terpenes and hydrogenated versions; and rosins and rosin derivatives and hydrogenated versions; and mixtures thereof. Suitable tackifying resins may have a ring and ball softening point from 70 °C to 160 °C, and will typically have a viscosity at 350 °F (177 °C), as measured using a Brookfield viscometer, of no more than 14000 centipoise, preferably no more than 10000 centipoise, such as, for instance, no more than 2000 centipoise. They are also available with differing levels of hydrogenation, or saturation, which is another commonly used term.

Useful examples include Eastotac^{™} H-100, H-115 and H-130 from Eastman Chemical Co., which are partially hydrogenated cycloaliphatic petroleum hydrocarbon resins with softening points of 100 °C, 115 °C and 130 °C, respectively. These are available in the E grade, the R grade, the L grade and the W grade, indicating differing levels of hydrogenation with E being the least hydrogenated and W being the most hydrogenated. The E grade has a bromine number of 15, the R grade a bromine number of 5, the L grade a bromine number of 3 and the W grade has a bromine number of 1. Eastotac^{™} H-142R from Eastman Chemical Co. has a softening point of about 140°C Other useful tackifying resins include Escorez^{™} 5300, 5400 and 5637, partially hydrogenated cycloaliphatic petroleum hydrocarbon resins, and Escorez^{™} 5600, a partially hydrogenated aromatic modified petroleum hydrocarbon resin all available from Exxon Chemical Co.; WINGTACK^{®} Extra, which is an aliphatic, aromatic petroleum hydrocarbon resin available from Sartomer; WINGTACK^{®} 95, an aliphatic C-5 petroleum hydrocarbon resin available from Sartomer; and Regalite R9001 and Regalite S5100, hydrogenated hydrocarbon resins with different degree of hydrogenation, available from Eastman Chemical Company.

There are numerous types of rosins and modified rosins available with differing levels of hydrogenation including gum rosins, wood rosins, tall-oil rosins, distilled rosins, dimerized rosins and polymerized rosins. Some specific modified rosins include glycerol and pentaerythritol esters of wood rosins and tall-oil rosins. Commercially available grades include, but are not limited to, Sylvatac^{™} RE103, a pentaerythritol rosin ester available from Arizona Chemical Co., Permalyn^{™} 5110, a pentaerythritol modified rosin available from Eastman Chemical Company and Foral 105 which is a highly hydrogenated pentaerythritol rosin ester also available from Eastman Chemical Company. Other examples include Sylvatac^{™} RE85 and RE95, which are 85 °C and 95 °C melt point rosin esters, Sylvaros PR 295 and Sylvaros PR 140, which are polymerized and modified rosins, and Sylvares TP2040 is a phenolic modified terpene resin available from Arizona Chemical Co. and Foral AX-E is a 80°C melt point hydrogenated rosin acid available from Eastman Chemical Company. Another exemplary tackifier, Piccotac 1115, has a viscosity at 350°F (177°C) of about 1600 centipoise. Other typical tackifiers have viscosities at 350 °F (177 °C) of much less than 1600 centipoise, for instance, from 50 to 300 centipoise.

The adhesives may, if desired, also comprise a wax.

Waxes suitable for use in the present invention include paraffin waxes, microcrystalline waxes, polyethylene waxes, polypropylene waxes, by-product polyethylene waxes, Fischer-Tropsch waxes, oxidized Fischer-Tropsch waxes and functionalized waxes such as hydroxy stearamide waxes and fatty amide waxes. High density low molecular weight polyethylene waxes, by-product polyethylene waxes and Fischer-Tropsch waxes are conventionally referred to in the art as synthetic high melting point waxes. Modified waxes, including vinyl acetate modified waxes such as AC-400 (Honeywell) and MC-400 (available from Marcus Oil and Company), maleic anhydride modified waxes such as Epolene C-18 (available from Eastman Chemical) and AC-575A and AC-575P (available from Honeywell) and oxidized waxes are also useful in the practice of the invention. Callista^{®} 122, 158, 144, 435, and 152 available from Shell Lubricants, Houston, Tex.; Sasolwax C80 and Sasolwax H-1, H-4 and H-8, Fischer-Tropsch waxes available from Sasol Wax are also preferred waxes for use in the practice of the invention. Hydrogenated castor oil is also suitable for employment in this context.

Paraffin waxes that can be used in the practice of the invention include Pacemaker^{®} 30, 32, 35, 37, 40, 42, 45 & 53 available from Citgo Petroleum, Co.; Astor Okerin^{®} 236 available from Honeywell; R-7152 Paraffin Wax available from Moore & Munger; R-2540 available from Moore and Munger; and other paraffinic waxes such as those available from Sasol Wax under the product designations Sasolwax 5603, 6203 and 6805.

The microcrystalline waxes useful in the context of the present invention include those having 50 percent by weight or more cyclo or branched alkanes with a length of between 30 and 100 carbons. They are generally less crystalline than paraffin and polyethylene waxes, and have melting points of greater than about 70 °C Examples include Victory^{®} Amber Wax, a 70°C melting point wax available from Baker Petrolite Corp.; Bareco^{®} ES-796 Amber Wax, a 70 °C melt point wax available from Bareco; Besquare^{®} 175 and 195 Amber Waxes and 80 °C and 90 °C melt point microcrystalline waxes both available from Baker Petrolite Corp.; Indramic^{®} 91, a 90 °C melt point wax available from Industrial Raw Materials; and Petrowax^{®} 9508 Light, a 90 °C melt point wax available from Petrowax. Other examples of microcrystalline waxes are Sasolwax 3971 available from Sasol Wax and Microwax K4001 available from Alfred Kochem GmBH.

Exemplary high density low molecular weight polyethylene waxes falling within this category include ethylene homopolymers available from Backer Petrolite Corp. as Polywax^{™} 500, Polywax^{™} 1500 and Polywax^{™} 2000. Polywax^{™} 2000 has a molecular weight of approximately 2000, an Mw/Mn of approximately 1.0, a density at 16 °C of about 0.97 g/cm³, and a melting point of approximately 126 °C

When used, the wax component will typically be present in amounts of up to about 45 wt.-%. Formulations comprising a wax component will more typically comprise from about 0 to about 40 wt.-%, such as about 0, 5, 10 20, 30 or 40 wt.-%. Preferred waxes have a melt temperature between 120 °F and 250 °F, more preferably between 150 °F and 230 °F, and most preferable between 180 °F and 220 °F

The adhesives of the present invention may desirably also contain a stabilizer and/or antioxidant. These compounds are added to protect the adhesive from degradation caused by reaction with oxygen induced by such things as heat, light, or residual catalyst from the raw materials such as the tackifying resin.

Among the applicable stabilizers or antioxidants suitable for employment in the context of the present invention include high molecular weight hindered phenols and multifunctional phenols such as sulfur and phosphorous-containing phenol. Hindered phenols are well known to those skilled in the art and may be characterized as phenolic compounds which also contain sterically bulky radicals in close proximity to the phenolic hydroxyl group thereof. In particular, tertiary butyl groups generally are substituted onto the benzene ring in at least one of the ortho positions relative to the phenolic hydroxyl group. The presence of these sterically bulky substituted radicals in the vicinity of the hydroxyl group serves to retard its stretching frequency, and correspondingly, its reactivity; this hindrance thus providing the phenolic compound with its stabilizing properties. Representative hindered phenols include; 1,3,5-trimethyl-2,4,6-tris-(3,5-di-tert-butyl-4-hydroxybenzyl)-benzene; pentaerythrityl tetrakis-3(3,5-di-tert-butyl-4-hydroxyphenyl)-propionate; n-octadecyl-3(3,5-di-tert-butyl-4-hydroxyphenyl)-propionate; 4,4'-methylenebis(2,6-tert-butyl-phenol); 4,4'-thiobis(6-tert-butyl-o-cresol); 2,6-di-tertbutylphenol; 6-(4-hydroxyphenoxy)-2,4-bis(n-octyl-thio)-1,3,5 triazine; di-n-octylthio)ethyl 3,5-di-tert-butyl-4-hydroxybenzoate; and sorbitol hexa[3-(3,5-d i-tert-butyl-4-hydroxy-phenyl)-propionate].

The performance of these antioxidants may be further enhanced by utilizing, in conjunction therewith, known synergists such as, for example, thiodipropionate esters and phosphites. Distearylthiodipropionate is particularly useful. These stabilizers, if used, are generally present in amounts of about 0.1 to 1.5 wt.-%, preferably 0.25 to 1.0 wt.-%.

Such antioxidants are commercially available from Ciba Specialty Chemicals and include Irganox^{®} 565, 1010, 1076 and 1726 which are hindered phenols. These are primary antioxidants which act as radical scavengers and may be used alone or in combination with other antioxidants such as phosphite antioxidants like Irgafos^{®} 168 available from Ciba Specialty Chemicals. Phosphite catalysts are considered secondary catalysts and are not generally used alone. These are primarily used as peroxide decomposers. Other available catalysts are Cyanox^{®} LTDP available from Cytec Industries and Ethanox^{®} 330 available from Albemarle Corp. Many such antioxidants are available either to be used alone or in combination with other such antioxidants. These compounds are added to the hot melts in small amounts and have no effect on other physical properties.

Other compounds that could be added that also do not affect physical properties are pigments which add color, or fluorescing agents, to mention only a couple. Additives like these are known to those skilled in the art.

Depending on the contemplated end uses of the adhesives, other additives such as plasticizers, thixotroping agents (for instance, but without limitation, bentonites, pyrogenic silicic acids, urea derivatives, fibrillated short fibres or short pulp fibres), pigments, dyestuffs, fluorescing agents and fillers (for instance, but without limitation, silicates, talc, calcium carbonates, clays or carbon black) conventionally added to hot melt adhesives may be included.

Thus, in various embodiments, the hot melt adhesive composition according to the present invention further comprises, in addition to the at least one base adhesive polymer and the at least one betulin tackifier, at least one, preferably at least two additional ingredients selected from the group consisting of additional tackifiers, waxes, stabilizers, antioxidants, plasticizers, thixotroping agents, pigments, dyestuffs, fluorescing agents and fillers.

The adhesive compositions of the present invention are prepared by blending the components in the melt at a temperature of above about 100 °C to about 220 °C until a homogeneous blend is obtained. Two hours is usually sufficient. Various methods of blending are known in the art and any method that produces a homogeneous blend is satisfactory.

It will be appreciated that formulations can be tailored for specific end use application. Formulations for packaging and bookbinding will typically have a viscosity of from about 700 cP to about 10,000 cP at 180 °C Formulations for woodworking applications would preferably have a higher viscosity (Brookfield) of, e.g., up to about 200,000 cP at 200 °C

In addition to providing the art with novel adhesive formulations, the invention provides for a method of increasing the heat resistance of a hot melt adhesive, with a method of bonding one substrate to another substrate, and to articles of manufacture comprising the adhesives of the invention.

In one embodiment of the invention, a method of:
- increasing the heat resistance, and/or
- increasing the amount of renewable material-based ingredients, and/or
- lowering the allergy potential, and/or
- increasing the E-modulus; and/or
- improving the smell
of a hot melt adhesive composition is provided. The method comprises adding to a hot melt adhesive composition at least one betulin tackifier, as herein defined and described above, to increase the heat resistance and/or increase the amount of renewable material-based ingredients and/or lower the allergy potential and/or increase the E-modulus of the composition.

For instance, the method of the invention can be used to increase the heat resistance of a hot melt adhesive formulation at least by 2 °C or more. Formulations showing an increase in heat resistance of least 1 °C, at least 2 °C, at least 3 °C, at least 4 °C, at least 5 °C, at least 7 °C, at least 10 °C, at least 15 and at least 20 °C or more can be achieved in accordance with the practice of the invention.

Additionally, the method can be used to increase the amount of renewable material-based ingredients of a hot melt adhesive composition by at least about 1 %, preferably at least about 5 %, more preferably at least about 10 %, such as about 10, 15, 20, 25, 30, 35, 40, 45, or 50 %, compared to a composition not comprising the betulin-based tackifier of the present invention.

Additionally, the method can be used to increase the E-modulus of a hot melt adhesive composition by at least 2 MPa, preferably at least 5 MPa, more preferably at least 10 MPa, such as about 10, 11, 12, 13,14, 15, 16, 17, 18, 19 or 20 MPa, compared to a hot melt adhesive composition not comprising the betulin-tackifier according to the present invention.

In another embodiment of the invention, a method for using the hot melt adhesive formulation according to the present invention is provided. Particularly, provided herein is a method of bonding a substrate to a similar or dissimilar substrate. The method comprises applying to at least a first substrate a molten hot melt adhesive composition according to the present invention, bringing at least a second substrate in contact with the composition applied to the first substrate, and allowing the composition to solidify, whereby the first and second substrates are bonded together.

Still other embodiments of the invention provide the art with various articles of manufacture prepared using the hot melt adhesives according to the present invention.

The hot melt adhesives of the invention find use in, for example, packaging, converting, cigarette manufacture, building & construction, electronics, automotive, bookbinding, bag ending, wood working and in nonwoven markets.

Because of the high heat resistance, the adhesives of the invention may advantageously be used in bookbinding applications where moisture curing hot melt adhesives are currently being used.

The adhesive is also particularly useful in the manufacture of nonwoven articles. The adhesives may be used as construction adhesives, as positioning adhesives, and in elastic attachment applications in the manufacture of, e.g., diapers, feminine hygiene pads (which include conventional sanitary napkins and panty liners) and the like.

Use of the term wood working is used broadly herein to refer to articles that comprise a wood material. It is to be understood that term "wood" is being used generically and encompasses all types of wood as well as wood-containing composites, engineered wood, particle board and the like. Wood working applications include, for example, use in the manufacture of flooring, laminated countertops, doors, furniture and the like. The adhesive of the invention may advantageously be used to bond one wooden substrate (i.e., wood, wood composite or the like) to a second substrate, which may or may not be a wooden substrate.

The adhesives find particular use as case, carton, and tray forming adhesives, and as sealing adhesives, including heat sealing applications, for example in the packaging of cereals, cracker and beer products. Encompassed by the invention are containers, e.g., cartons, cases, boxes, bags, trays and the like, wherein the adhesive is applied by the manufacturer thereof prior to shipment to the packager. Following packaging, the container is heat sealed.

In packaging end use applications, substrates to be bonded include virgin and recycled kraft, high and low density kraft, chipboard and various types of treated and coated kraft and chipboard. Composite materials are also used for packaging applications such as for the packaging of alcoholic beverages. These composite materials may include chipboard laminated to an aluminum foil which is further laminated to film materials such as polyethylene, mylar, polypropylene, polyvinylidene chloride, ethylene vinyl acetate and various other types of films. Additionally, these film materials also may be bonded directly to chipboard or kraft. The aforementioned substrates by no means represent an exhaustive list, as a tremendous variety of substrates, especially composite materials, find utility in the packaging industry.

In building and construction, hotmelt adhesives can be used as spacer between walls and panels. Larger wood-based structures can be assembled applying hotmelt adhesives.

In electronics and in the automotive industry, one important application is low pressure molding of electronic components or lighting components.

Hot melt adhesives for packaging are generally extruded in bead form onto a substrate using piston pump or gear pump extrusion equipment. Hot melt application equipment is available from several suppliers including Nordson, ITW and Slautterback. Wheel applicators are also commonly used for applying hot melt adhesives, but are used less frequently than extrusion equipment.

It is understood that all embodiments disclosed herein in relation to the compositions are similarly applicable to methods of application and uses thereof, insofar applicable, and *vice versa.*

The following examples are given to illustrate the present invention. Because these examples are given for illustrative purposes only, the invention should not be deemed limited thereto.

### Examples

### Example 1: production of betulin tackifiers

Generally, the betulin tackifiers (in the following: polyesters) can be produced by mixing the individual components and heating the mixture to 220 °C in the nitrogen stream. Afterwards vacuum is applied to reach adequate reaction conversion.

The samples are analyzed by means of GPC (gel permeation chromatography). The chromatography with an IR detector after calibration by means of a polystyrene standard occurred at a column oven temperature of 40 °C and a temperature in the detector of likewise 40 °C. The relative and the numerical average and weight average molecular weight values can be calculated from the molecular weight distribution curve, and the polydispersity can be determined from that.

The polyesters thereby produced were measured by differential scanning calorimetry, wherein a sample was first heated to 150 °C in order to then be brought to -90 °C at a cooling rate of 10 Kelvin per minute. After 10 minutes at -90 °C, the sample was brought to 150 °C at a heating rate of 10 Kelvin per minute and the DSC diagram was recorded. The glass transition temperature of the sample was determined with the aid of the DSC diagram.

### Polyester PES 1:

110,7 g Betulin, 98% purity
28,49 g Butanediol
51,25 g succinic acid, 99% purity
Betulin 25 mol%, butanediol 31,6 mol% and succinic acid 43,4 mol%
OH value: 58

### Polyester PES 2:

177 g Betulin
7,8 g Butanediol
215,22 g dimeric fatty acid (PRIPOL 1013 from Croda)
4 g (1%) Chinox1010
Betulin 46,5mol%, butanediol 10mol% and dimeric fatty acid 43,5mol%
OH value: 24

### Polyester PES 3:

221,26 g Betulin M=442,72g/mol) Soll 221,25g
9,66 g Butanediol (M=90,12g/mol) Soll 9,68g
269,05 g dimeric fatty acid (PRIPOL 1013 from Croda)
5 g (1%) Chinox1010 Soll 5g
Betulin 46,5mol%, butanediol 10mol% und dimeric fatty acid 43,5mol%
OH value: 27

### Polyester PES 4:

273,3 g Betulin
68,77 g NPG
156,65 g adipic acid, 99 purity
Betulin 26,3 mol%, 2,2-dimethyl-1,3-propanediol (NPG) 28,1mol% und adipic acid 45,6mol%
Ziel OH Zahl 39

### Polyester PES 5:

170,3 g Betulin
8,7 g Butanediol
301,1 g dimeric fatty acid (PRIPOL 1013 from Croda)
4,8 g (1%) Chinox1010 Soll
Betulin 38,3mol%, butanediol 9,6mol% und dimeric fatty acid 52,1mol%
Acid value: 15,5

### Example 2: Hot melt EVA compositions and performance evaluation

Softening point was measured on a HRB 754 from *Herzog* on the basis of ASTM E 28.

Open time was determined by applying a bead of the adhesive of 600 µm thickness on a sheet of paper at 170°C. After defined times the thumb (protected by a suitable glove) is pressed on the bead. The open time is set as the time until no bond between the paper sheet and the adhesive bead is formed anymore.

Mechanical properties like elongation, E-modulus and Ry were determined on basis of DIN 53504:2017-03. Test specimen were cut from a heat pressed sample of ca. 1,0 mm thickness which was stored for 24 h at 23°C/ 50% rh.

Adhesion test was performed according to the following procedure: 50 g of the respective adhesive were heated to 200-210°C for 45 min and applied with a doctor knife onto a decor foil at a thickness of ca. 40 g/m2 (speed ca. 15 m/min) and the foil immediately pressed against a MDF panel (10 cm w x 20 cm l). The foil is appr. 4 cm wider compared to the MDF panel to produce an overlaying part. The exact coating weight is determined by weighing a coated foil and subtracting the weight of a non-coated foil. The resulting specimen were conditioned at 23°C/ 50 rh for 24 h. In the overlaying foil a small hole is punched and weights of 50 g were connected to the strips and the setup was placed in an oven. The temperature was increased every hour for 5°C. The temperature at which more than 10 cm of foil are peeled off the substrate is defined as the adhesion temperature.

Shore D was measured on the Shore D meter from *Bareiss* according to DIN ISO 7619, ISO 48-4, ASTMD 2240.

Viscosity was measured on a *Brookfield CAP 2000+* at 15 rpm / 180°C after 3min, spindle 29.

**Table 1**

| **INGREDIENTS** | **R1** | **R2** | **E1** | **E2** | **E3** | **E4** | **E5** | **E6** | **E7** | **E8** | **E9** |
|---|---|---|---|---|---|---|---|---|---|---|---|
| PES 1 | | | 30 | | | | | | | | |
| PES 4 | | | | 30 | | 12,5 | | 12 | | 3,3 | |
| PES 3 | | | | | 30 | | | | | | |
| PES 5 | | | | | | | 12,5 | | 12 | | 3,3 |
| Sylvalite RE 100 S | 30 | | | | | | | | | | |
| Hikotack P 90 S | | | | | | | | 23,9 | 23,9 | | |
| Hikotack P 120 S | | | | | | 18 | 18 | | | | |
| Unitack P 120 | | 30 | | | | | | | | | |
| Novares C 120 VL | | | | | | | | | | 20,1 | 20,1 |
| Escorene UL 00226 CC | | | | | | 26,7 | 26,7 | | | | |
| Escorene UL 00728 CC | | | | | | | | | | 8,4 | 8,4 |
| Escorene UL 150-19 CC | | | | | | | | | | 10 | 10 |
| Evatane 28-420 | 68 | 68 | 68 | 68 | 68 | 6 | 6 | 19,9 | 19,9 | | |
| Evatane 28-150 | | | | | | | | | | 16,7 | 16,7 |
| Evatane 28-25 | | | | | | | | 5 | 5 | | |
| Escorene UL 53019 CC | | | | | | 27,3 | 27,3 | 13,9 | 13,9 | | |
| Sasolwax H1 | | | | | | | | | | 1 | 1 |
| Irganox B 225 | | | | | | 0,5 | 0,5 | 0,4 | 0,4 | | |
| Irganox 1010 | 2 | 2 | 2 | 2 | 2 | | | | | 0,1 | 0,1 |
| Irganox PS 802 FL | | | | | | | | | | 0,2 | 0,2 |
| BaSO₄ | | | | | | | | | | 26,8 | 26,8 |
| CaCO₃ | | | | | | 9 | 9 | 24,9 | 24,9 | 13,4 | 13,4 |
| Σ [weight.-%] | | 100 | 100 | 100 | 100 | 100 | 100 | 100 | 100 | 100 | 100 |

| **PARAMETERS** | | | | | | | | | | | |
|---|---|---|---|---|---|---|---|---|---|---|---|
| Softening point (Ring & Ball) [°C] | 95-96 | 81-82 | 93-94 | 89-90 | 80-82 | 113-114 | 106-108 | 90-91 | 87-88 | 116-118 | 104-106 |
| Open time at 170 °C [s] | 90-95 | 98-102 | 78-82 | 88-92 | 87-90 | 38-40-39 | 43-41-41 | 62-60-60 | 64-62-64 | 23-25-25 | 27-27-26 |
| Viscosity at 180°C | 10000 | 12400 | 22600 | 19900 | 11500 | 101200 | 90000 | 12950 | 13800 | 101900 | 91000 |
| Elongation [%] | 1160 | 948 | 50 | 182 | 1187 | 412 | 882 | 100 | 648 | 157 | 245 |
| E-Module [MPa] | 12 | 12 | 23 | 25,4 | 37,7 | 37,7 | 22,4 | 54,2 | 27,5 | 54,3 | 37,3 |
| Ry [N*mm⁻²] | 1,2 | 1,0 | 2,2 | 1,9 | 1,6 | 5,7 | 3,6 | 2,8 | 1,5 | 3,6 | 2,7 |
| Shore D | 12-14 | 10-12 | 18-20 | 16-18 | 14-16 | 30-32 | 30-32 | 36-38 | 36-38 | 38-40 | 38-40 |
| Adhesion test [°C] | 40 | 45 | n.d. | n.d. | n.d. | n.d. | n.d. | 50 | 50-55 | n.d. | n.d. |

### Example 3: Hot melt polyolefin compositions

**Table 2**

| **INGREDIENTS** | **R2** | **R3** | **E10** | **E11** | **E12** |
|---|---|---|---|---|---|
| AB AK 11287-187 oder 91 | | | 30 | | |
| AB AK 11287-146 oder 198 | | | | 30 | |
| AB AK 11287-196 | | | | | 30 |
| Sylvalite RE 100 S | 30 | | | | |
| Unitack P 120 | | 30 | | | |
| Vestoplast 708 | 68 | 68 | 68 | 68 | 68 |
| Irganox 1010 | 2 | 2 | 2 | 2 | 2 |
| **Σ [Gew.-%]** | **100** | **100** | **100** | **100** | **100** |

| **PARAMETERS** | | | | | |
|---|---|---|---|---|---|
| Softening point (Ring & Ball) [°C] | 98-99 | 99-100 | 100-101 | 101-102 | 100-101 |
| Open time at 170 °C [s] | 96-100 | 86-90 | 100-105 | 82-86 | 90-93 |
| Viscosity at 180°C | 5100 | 8870 | 20100 | 9750 | 8200 |
| Elongation [%] | 317 | 126 | 46 | 14 | 119 |
| E-Module [MPa) | 27 | 19 | 57,4 | 66,0 | 35,4 |
| Ry [N*mm⁻²] | 0,9 | 0,8 | 1,4 | 1,0 | 1,0 |
| Shore D | 14-16 | 12-14 | 10-12 | 12-14 | 12-14 |

## Claims

1. A hot melt adhesive composition comprising at least one adhesive base polymer, characterized that it further comprises at least one betulin tackifier.

2. The hot melt adhesive composition according to claim 1, wherein the adhesive base polymer is present in an amount of from 20 to 75 wt.-%, preferably from 30 to 60 wt.-%, based on the total weight of the adhesive composition.

3. The hot melt adhesive composition according to claim 1 or claim 2, wherein the betulin tackifier is present in an amount of from 5 to 80 wt.-%, preferably 5 to 70 wt.-%, more preferably from about 10 to 60 wt.-%, still more preferably from about 15 to 50 wt.-%, based on the total weight of the hot melt adhesive composition.

4. The hot melt adhesive composition according to any one of claims 1 to 3, wherein the betulin tackifier has a glass transition temperature T_{g} of -50 °C to 100 °C, preferably -50 °C to 100 °C, more preferably 0 °C to 100 °C.

5. The hot melt adhesive composition according to any one of claims 1 to 4, wherein the adhesive base polymer is selected from the group consisting of ethylene vinyl acetate (EVA), metallocene polyolefins, functional polyolefins, amorphous α-olefins, styrene-isoprene rubber (SIS), polybutadiene polymers, polylactic acid polymers, polyhydroxyalkanoates, as well as mixtures of the aforementioned.

6. The adhesive composition according to any one of claims 1 to 5, wherein the composition further comprises at least one additional ingredient selected from the group consisting of additional tackifiers, waxes, stabilizers, antioxidants, plasticizers, thixotroping agents, pigments, dyestuffs, fluorescing agents and fillers.

7. An article of manufacture comprising the adhesive according to any one of claims 1 to 6.

8. A method of using the hot melt adhesive composition according to any one of claims 1 to 6.

9. The method according to claim 8, wherein the method comprises comprising applying to at least a first substrate a molten hot melt adhesive composition according to anyone of claims 1 to 6, bringing at least a second substrate in contact with the composition applied to the first substrate, and allowing the composition to solidify, whereby the first and second substrates are bonded together.

10. A bonded assembly comprising two or more substrates bonded together by the adhesive composition of any one of claims 1 to 6.

11. A method of increasing the heat resistance of a hot melt adhesive composition, the method comprising adding to a hot melt adhesive composition at least one betulin tackifier to increase the heat resistance and/or increase the amount of renewable material-based ingredients and/or lower the allergy potential and/or increase the E-modulus of the composition.
